# FASCICULE DE BREVET EUROPEEN

(11) **EP 4 443 095 B1**
(45) Date de publication et mention de la délivrance du brevet: **15.10.2025**
(21) Numéro de dépôt: 23305482.4
(22) Date de dépôt: 03.04.2023
(51) Int. Cl.: F28G 1/16, F28D 21/00, F25B 47/00, F25B 39/00, B61D 27/00, F28D 1/02, F25B 1/00, B60H 1/00, F28D 1/04, F28G 15/04, F28G 15/02, F25B 39/02

(54) **ENSEMBLE POUR TRAITEMENT D AIR ET VÉHICULE TERRESTRE COMPRENANT UN TEL ENSEMBLE POUR TRAITEMENT D AIR**
LUFTBEHANDLUNGSANORDNUNG UND LANDFAHRZEUG MIT EINER SOLCHEN LUFTBEHANDLUNGSANORDNUNG
ASSEMBLY FOR AIR TREATMENT AND GROUND VEHICLE COMPRISING SUCH AN ASSEMBLY FOR AIR TREATMENT

(43) Date de publication de la demande: 09.10.2024
(73) Titulaire: SpeedInnov, 75008 Paris (FR)
(72) Inventeur: ALLAIN, François, 17440 AYTRE (FR); LE-MOUROUX, Hervé, 17340 CHATELAILLON PLAGE (FR); SARRAILLÉ, Jérôme, 17000 LA ROCHELLE (FR)
(74) Mandataire: Plasseraud IP

(56) Documents cités:
- EP-A1- 3 831 501
- DE-U1- 202013 000 545
- GB-A- 2 462 109
- US-A1- 2007 062 211
- US-A1- 2014 284 027
- US-A1- 2019 255 574
- US-A1- 2021 170 455
- US-B2- 7 967 918

## Description

La présente invention concerne un ensemble pour traitement d'air, du type comportant un premier échangeur thermique et un premier dispositif de nettoyage dudit premier échangeur thermique.

L'invention s'applique particulièrement aux systèmes de traitement d'air de véhicules terrestres, notamment ferroviaires.

Les systèmes CVC (Chauffage, Ventilation et Climatisation), destinés au chauffage, à la ventilation et à la climatisation des véhicules terrestres, sont équipés d'échangeurs thermiques. Ces derniers sont traversés par des flux d'air afin de chauffer ou de refroidir lesdits flux. Les poussières ou particules transportées par ces flux d'air se déposent au fil du temps sur des surfaces des échangeurs thermiques, compromettant leur efficacité.

Il est connu d'entretenir les systèmes CVC en les extrayant du véhicule afin de réaliser les opérations de nettoyage des échangeurs thermiques. Cependant, des contraintes d'ergonomie peuvent compliquer l'accès aux systèmes CVC. Un ensemble selon le préambule de la revendication 1 est divulgué par le document US 2014/284027 A1.

La présente invention a pour but de résoudre ces problèmes en proposant une solution de nettoyage des échangeurs thermiques adaptée à des conditions d'accessibilité limitées.

A cet effet, l'invention a pour objet un ensemble pour traitement d'air du type précité, selon la revendication 1. fluide selon une direction de déplacement, parallèle à la première surface de contact.

Suivant d'autres aspects avantageux de l'invention, l'ensemble comporte l'une ou plusieurs des caractéristiques suivantes, prises isolément ou suivant toutes les combinaisons techniquement possibles :
- le premier organe de soufflage comprend au moins une buse et un dispositif d'alimentation en fluide, relié à ladite au moins une buse ;
- l'ensemble comprend une pluralité de buses alignées selon une direction d'alignement, parallèle à la première surface de contact, le dispositif d'alimentation en fluide étant relié à la pluralité de buses ;
- le premier organe de déplacement comprend : un support, solidaire de la première surface de contact ; et un élément mobile, solidaire du premier organe de soufflage ;
- le support comprend au moins un rail s'étendant selon la direction de déplacement ; et l'élément mobile est apte à coulisser sur l'au moins un rail ;
- l'élément mobile est amovible par rapport au support ;
- le premier échangeur thermique comporte une pluralité d'ailettes s'étendant dans des plans perpendiculaires à la direction de déplacement ;
- l'ensemble comprend en outre un deuxième échangeur thermique et un deuxième dispositif de nettoyage dudit deuxième échangeur thermique, le deuxième échangeur thermique comprenant une deuxième surface de contact, destinée à être disposée perpendiculairement à un flux d'air pour un échange thermique avec ledit flux, le deuxième dispositif de nettoyage comprenant : un deuxième organe de soufflage d'un deuxième jet de fluide ; et un deuxième organe de déplacement dudit deuxième organe de soufflage, de sorte à déplacer le deuxième jet de fluide selon une direction de déplacement, parallèle à la deuxième surface de contact ;
- l'ensemble comprend en outre un circuit de fluide frigorigène, reliant les premier et deuxième échangeurs thermiques.

L'invention se rapporte en outre à un véhicule terrestre comprenant au moins une voiture, ladite voiture comprenant un ensemble pour traitement d'air tel que décrit ci-dessus.

L'invention sera mieux comprise à la lecture de la description qui va suivre, donnée uniquement à titre d'exemple non limitatif et faite en se référant aux dessins sur lesquels :
- la figure 1 est une vue schématique, en coupe, d'un véhicule terrestre selon un mode de réalisation de l'invention, comprenant un ensemble pour traitement d'air ; et
- les figures 2 et 3 sont des vues de détail de l'ensemble pour traitement d'air de la figure 1.

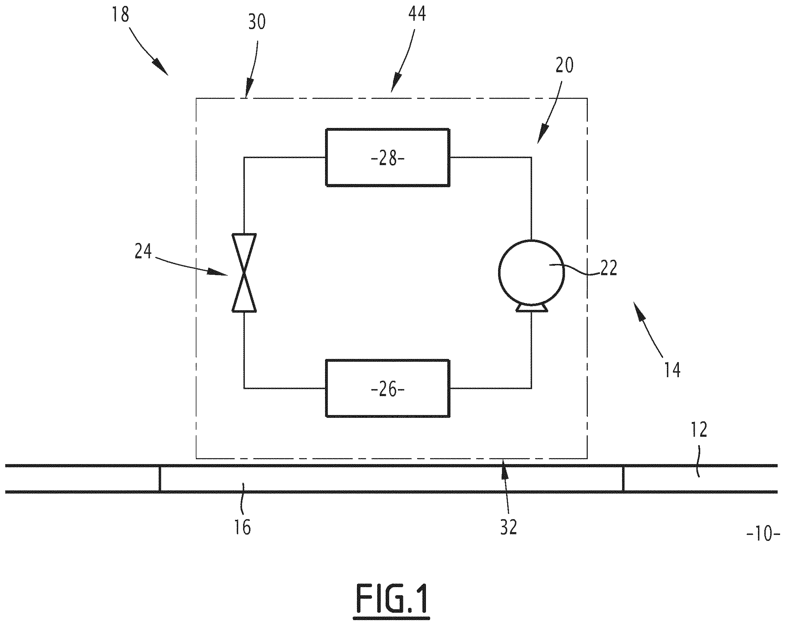

La figure 1 est une vue schématique, en coupe, d'un véhicule terrestre selon un mode de réalisation de l'invention. Il s'agit de préférence d'un véhicule ferroviaire, ou en variante d'un véhicule routier.

Le véhicule terrestre comprend au moins une voiture 10, visible sur la figure 1. La voiture 10 comporte : une paroi extérieure 12, délimitant un espace interne 14 ; et une trappe 16 de visite, ménagée dans ladite paroi extérieure.

La voiture 10 comporte en outre un module 18 de traitement d'air, disposé dans l'espace interne 14, en vis-à-vis de la trappe 16 de visite.

Le module 18 est de préférence un module CVC (Chauffage, Ventilation et Climatisation), c'est-à-dire destiné au chauffage, à la ventilation et à la climatisation de la voiture 10.

En particulier, le module 18 est équipé d'un système de pompe à chaleur. Plus précisément, le module 18 comporte : un circuit 20 de fluide frigorigène ; un compresseur 22 ; un détendeur 24 ; et un premier 26 et un deuxième 28 échangeurs thermiques.

Le module 18 comporte en outre une enveloppe externe 30. Ladite enveloppe externe 30 comprend en particulier un panneau 32 amovible, disposé en vis-à-vis de la trappe 16 de visite.

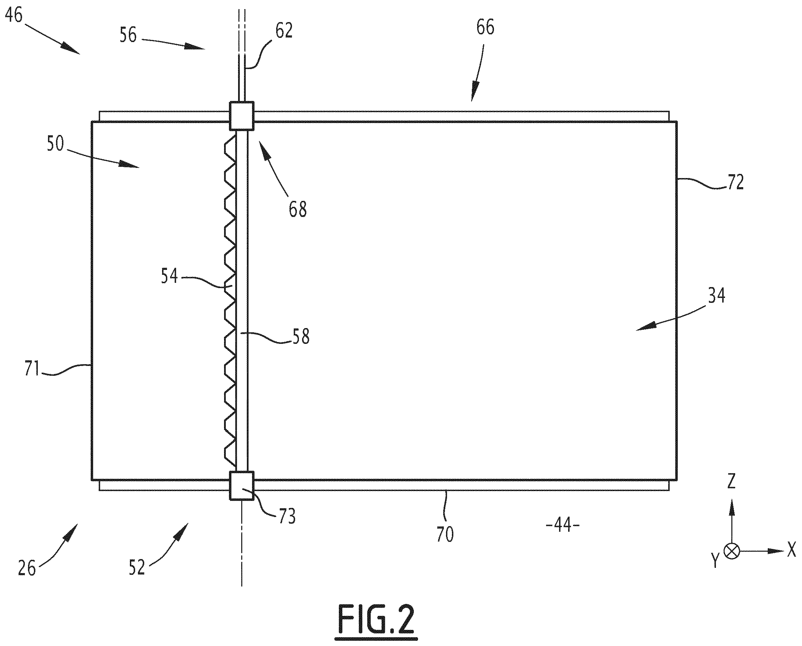

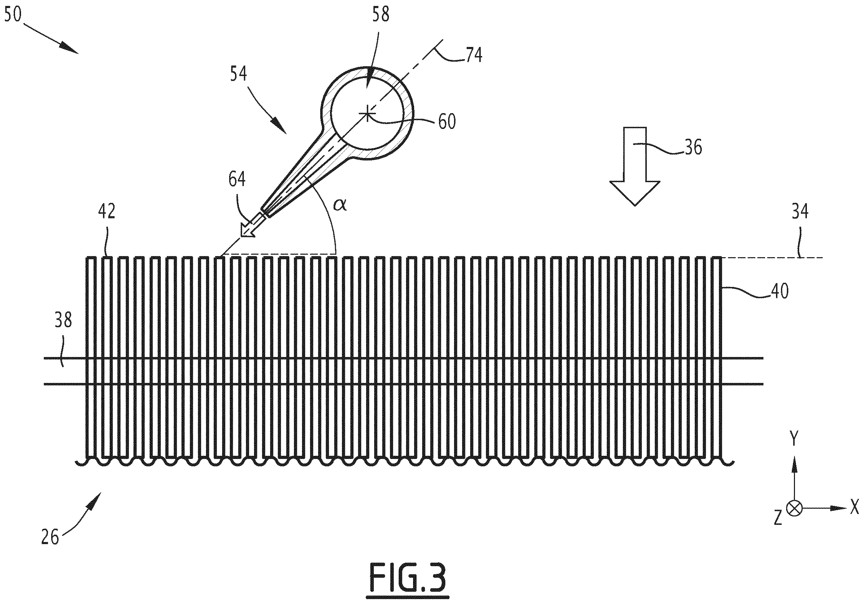

Le premier échangeur thermique 26 est représenté plus en détail sur les figures 2 et 3. Dans la description qui suit, sauf mention contraire, on considère que les premier 26 et deuxième 28 échangeurs thermiques sont sensiblement identiques.

L'échangeur thermique 26, 28 est un échangeur air-fluide frigorigène et est disposé sur le circuit 20 de fluide frigorigène. Plus précisément, l'échangeur thermique 26, 28 comprend une surface 34 de contact. Dans le module 18, la surface 34 de contact est disposée perpendiculairement à un flux 36 d'air. Un échange thermique est ainsi favorisé entre l'air du flux 36 et le fluide frigorigène du circuit 20.

Préférentiellement, l'échangeur thermique 26, 28 comporte: un conduit 38, destiné à recevoir le fluide frigorigène ; et une pluralité d'ailettes 40 solidaires dudit conduit 38 et placées parallèlement au flux 36 d'air. Le conduit 38 et les ailettes 40 sont formées de matériaux thermiquement conducteurs, tels que des métaux, pour favoriser un échange thermique entre le flux 36 d'air et le fluide frigorigène.

Dans le mode de réalisation représenté, la surface 34 de contact est matérialisée par des bords 42 des ailettes 40.

Plus précisément, on considère une base orthonormée (X, Y, Z) associée à l'échangeur thermique 26 des figures 2 et 3. Les ailettes 40 sont disposées dans des plans (Y, Z) parallèles entre eux. Les bords 42 formant la surface 34 de contact sont disposés dans un plan (X, Z). Le flux 36 d'air est dirigé selon Y.

Dans le mode de réalisation représenté, l'échangeur thermique 26, 28 fait partie d'un ensemble 44 pour traitement d'air, intégré au module 18. Plus précisément, l'ensemble 44 comporte l'échangeur thermique 26, 28 précédemment décrit et un dispositif 46 de nettoyage, associé audit échangeur thermique 26, 28.

Le dispositif 46 de nettoyage comporte un organe 50 de soufflage et un organe 52 de déplacement.

L'organe 50 de soufflage comporte : au moins une buse 54 ; et un dispositif 56 d'alimentation en fluide, relié à ladite au moins une buse 54.

De préférence, l'organe 50 de soufflage comporte : un canal 58 d'alimentation, relié au dispositif 56 d'alimentation en fluide ; et une pluralité de buses 54, chacune en communication avec le canal 58 d'alimentation.

Le canal 58 d'alimentation est par exemple un tube rectiligne, disposé selon un axe de canal 60. Une première extrémité dudit tube est raccordée au dispositif 56 d'alimentation. Une seconde extrémité dudit tube est fermée.

Les buses 54 sont alignées parallèlement à l'axe de canal 60 sur une paroi du canal 58 d'alimentation.

Le dispositif 56 d'alimentation en fluide est de préférence une arrivée de gaz, plus préférentiellement une arrivée d'air comprimé, par exemple alimentée par une pompe (non représentée). Le dispositif 56 d'alimentation comprend par exemple un tuyau 62 souple.

Les buses 54 sont disposées de manière à souffler des jets 64 d'air comprimé sensiblement coplanaires, dans un plan parallèle à l'axe de canal 60.

Dans le mode de réalisation représenté, l'organe 52 de déplacement comprend : un support 66, solidaire de la surface 34 de contact de l'échangeur thermique 26, 28 ; et un élément mobile 68, solidaire de l'organe 50 de soufflage.

De préférence, le support 66 comprend au moins un rail 70 rectiligne. L'au moins un rail 70 définit une direction de déplacement de l'organe 50 de soufflage par rapport à la surface 34 de contact. Dans le mode de réalisation représenté, la direction de déplacement est disposée selon X.

Plus précisément, la surface 34 de contact s'étend selon la direction X de déplacement entre un premier 71 et un deuxième 72 bords opposés.

Dans le mode de réalisation représenté, le support 66 comprend deux rails 70 latéraux, chaque rail 70 étant disposé sur un bord de la surface 34 de contact. Dans un mode de réalisation non représenté, le support 66 comporte en outre un rail central, disposé entre les deux rails latéraux sur la surface 34 de contact, comme il sera décrit ultérieurement.

L'élément mobile 68 comporte deux patins 73, chaque patin 73 étant disposé à une extrémité du canal 58 d'alimentation. Chaque patin 73 est apte à coopérer avec l'un des rails 70 pour déplacer l'organe 50 de soufflage le long desdits rails 70. Par exemple, un patin 73 a une forme de crochet, apte à glisser sur un rail 70. En variante, un patin 73 est équipé de galets aptes à rouler le long du rail 70.

Selon un premier mode de réalisation, l'élément mobile 68 est relié de manière permanente au support 66. Selon un deuxième mode de réalisation, l'élément mobile 68 est amovible et peut être dissocié du support 66, comme il sera décrit ultérieurement.

La figure 3 montre une vue schématique en coupe de l'organe 50 de soufflage, dans une configuration assemblée de l'élément mobile 68 avec le support 66. Dans ladite configuration assemblée, l'élément mobile 68 est au contact du support et apte à se déplacer dans la direction de déplacement.

Dans la configuration assemblée, l'axe 60 du canal 58 d'alimentation est parallèle à la surface 34 de contact et une direction 74 de chaque jet 64 d'air comprimé forme un angle α avec ladite surface 34, les buses 54 étant orientées vers le premier bord 71 de ladite surface 34. L'angle α est compris entre 30° et 60°.

De préférence, comme dans le mode de réalisation représenté, l'angle α est proche de 45°.

Dans le mode de réalisation représenté, dans la configuration assemblée, l'axe 60 du canal 58 d'alimentation est parallèle à Z et forme donc un angle de 90° avec la direction de déplacement. En variante, l'axe de canal 60 forme un angle non nul, mais inférieur à 90°, avec la direction de déplacement. Ledit angle est par exemple compris entre 60° et 90°.

Dans le mode de réalisation représenté, le dispositif 46 de nettoyage est configuré de sorte que l'émission des jets 64 d'air comprimé conduise par réaction au déplacement de l'organe 50 de soufflage le long des rails 70. Plus précisément, dans le mode de réalisation représenté, l'angle α est choisi de sorte qu'un angle incident des jets 64 sur la surface des ailettes 40, disposées dans des plans (Y, Z), permette par réaction un déplacement de l'organe 50 de soufflage le long des rails 70. Comme visible sur la figure 3, ledit angle incident des jets est égal à l'angle α. Un tel mode de réalisation impose donc une direction de déplacement de l'organe 50 de soufflage perpendiculaire aux ailettes 40.

Dans une variante de réalisation, le déplacement de l'organe de soufflage n'est pas assuré par les jets d'air comprimé.

Selon un mode de réalisation, le dispositif de nettoyage comprend en outre un actionneur non représenté), manuel ou motorisé, pour déplacer l'organe 50 de soufflage le long des rails 70. Un tel déplacement peut avoir lieu pendant le fonctionnement des buses, ou pour remettre l'organe de soufflage dans une position initiale comme décrit ci-après.

L'actionneur est par exemple une tige (non représentée) reliée à l'organe 50 de soufflage. En variante, l'actionneur est matérialisé par le tuyau 62 d'arrivée d'air.

Dans le mode de réalisation de la figure 2, l'organe 50 de soufflage présente une longueur selon l'axe de canal 60 analogue à une hauteur selon Z de la surface 34 de contact. Ainsi, un déplacement selon X de l'organe 50 de soufflage balaie l'ensemble de la surface 34 de contact.

En variante non représentée, l'organe 50 de soufflage présente une longueur selon l'axe de canal 60 égale à environ 50% de la hauteur selon Z de la surface 34 de contact. Par ailleurs, comme dans la variante indiquée ci-dessus, le support 66 comporte deux rails 70 latéraux et un rail central ; et l'élément mobile 68 est amovible et peut être dissocié du support 66.

Ainsi, il est possible de balayer une première zone de la surface 34 de contact au cours d'un premier passage de l'organe 50 de soufflage, disposé entre le rail central et l'un des rails 70 latéraux ; puis de balayer une deuxième zone de la surface 34 de contact au cours d'un deuxième passage de l'organe 50 de soufflage, disposé entre le rail central et l'autre rail latéral 70. Il est ainsi possible de diminuer la taille de l'organe 50 de soufflage.

Selon l'invention, au moins l'un des échangeurs thermiques 26 et 28 est associé à un dispositif de nettoyage 46, formant un ensemble 44 pour traitement d'air. Dans le mode de réalisation représenté, chacun des échangeurs thermiques 26 et 28 est associé à un dispositif de nettoyage 46.

Selon un mode de réalisation, l'enveloppe 30 du module 18 est fixe dans l'espace interne 14 de la voiture 10, ou difficile à déplacer, à l'exception du panneau 32 amovible.

Comme visible sur la figure 1, le premier échangeur thermique 26 est situé en vis-à-vis du panneau 32 amovible et de la trappe 16 de visite. Il est ainsi possible d'équiper ledit premier échangeur thermique 26 d'un organe 50 de soufflage amovible et déplaçable entre deux jeux de rails 70 comme décrit ci-dessus.

En revanche, le deuxième échangeur thermique 28, éloigné du panneau 32 amovible, est difficilement accessible à un opérateur. Dans ce cas, il est préférable d'équiper le dispositif 46 de nettoyage de l'actionneur manuel ou motorisé précédemment décrit.

Un procédé de fonctionnement du dispositif 46 de nettoyage va maintenant être décrit.

Tout d'abord, l'organe 50 de soufflage est positionné sur les rails 70 de sorte à être situé à proximité du premier bord 71 de la surface 34 de contact.

Le dispositif 56 d'alimentation est ensuite mis en route, de sorte que chaque buse 54 émette un jet 64 d'air comprimé dans la direction 74 d'émission. Ledit jet d'air comprimé permet d'évacuer les poussières et particules se trouvant dans l'échangeur thermique, à proximité de la surface 34 de contact, en particulier entre les ailettes 40.

De plus, par réaction mécanique à l'impact des jets 64 sur les ailettes 40, l'organe 50 de soufflage se déplace le long des rails 70 en direction du deuxième bord 72. L'ensemble de la surface 34 de contact est ainsi progressivement balayée et nettoyée par les jets 64.

Selon un mode de réalisation, lorsque l'organe 50 de soufflage a atteint le deuxième bord 72, il est déplacé dans l'autre sens par l'actionneur. Par exemple, un opérateur exerce une traction sur le tuyau 62 d'arrivée d'air, ou sur la tige formant ledit actionneur, pour rapprocher l'organe de soufflage du premier bord 71.

En variante, lorsque l'organe 50 de soufflage a atteint le deuxième bord 72, il est déplacé manuellement ou dissocié des rails 70 par un opérateur.

Dans le mode de réalisation décrit ci-dessus comprenant un rail central, le nettoyage est effectué en deux étapes successives, sur les deux zones de la surface 34 de contact délimitées par ledit rail central.

Un module CVC tel que le module 18, équipé d'ensembles 44 décrits ci-dessus, permet un entretien facilité des échangeurs thermiques 26, 28. En particulier, les opérations d'entretien ne nécessitent pas d'extraction du module 18 hors de l'espace interne 14, mais uniquement une éventuelle ouverture de la trappe 16 de visite et du panneau 32 amovible.

## Revendications

1. Ensemble (44) pour traitement d'air, comprenant un premier échangeur thermique (26) et un premier dispositif (46) de nettoyage dudit premier échangeur thermique (26),
le premier échangeur thermique (26) comprenant : une première surface (34) de contact, destinée à être disposée perpendiculairement à un flux (36) d'air pour un échange thermique avec ledit flux (36), et une pluralité d'ailettes (40) s'étendant dans des plans (Y, Z) perpendiculaires à la première surface (34) de contact ;
le premier dispositif de nettoyage (46) comprenant :
- un premier organe (50) de soufflage ; et
- un premier organe (52) de déplacement dudit premier organe de soufflage (50), selon une direction (X) de déplacement, parallèle à la première surface de contact (34) et perpendiculaire aux ailettes (40) ;
le premier organe de soufflage comprenant : une pluralité de buses (54) alignées selon un axe (60) de canal, parallèle à la première surface (34) de contact ; et un dispositif (56) d'alimentation en fluide, relié à la pluralité de buses ;
les buses étant disposées de manière à souffler des premiers jets (64) d'air sensiblement coplanaires dans un plan parallèle à l'axe (60) de canal ;
l'ensemble étant **caractérisé en ce qu'**une direction (74) de chaque premier jet (64) d'air forme un angle (α), compris entre 30° et 60°, avec la première surface de contact (34), ledit angle (α) étant choisi de sorte à former un angle incident de chaque premier jet (64) de fluide sur le plan de chaque ailette (40).

2. Ensemble (44) selon la revendication 1, dans lequel le premier angle (α) entre chaque premier jet (64) d'air et la première surface de contact (34) est proche de 45°.

3. Ensemble (44) selon la revendication 1 ou 2, dans lequel le premier organe (52) de déplacement comprend : un support (66), solidaire de la première surface de contact (34) ; et un élément mobile (68), solidaire du premier organe de soufflage (50).

4. Ensemble (44) selon la revendication 3, dans lequel le support (66) comprend au moins un rail (70) s'étendant selon la direction (X) de déplacement ; et l'élément mobile (68) est apte à coulisser sur l'au moins un rail.

5. Ensemble (44) selon la revendication 3 ou 4, dans lequel l'élément mobile (68) est amovible par rapport au support (66).

6. Ensemble (44) selon l'une des revendications précédentes, comprenant en outre un deuxième échangeur thermique (28) et un deuxième dispositif (44) de nettoyage dudit deuxième échangeur thermique (28),
le deuxième échangeur thermique (28) comprenant une deuxième surface de contact (34), destinée à être disposée perpendiculairement à un flux d'air pour un échange thermique avec ledit flux,
le deuxième dispositif de nettoyage comprenant :
- un deuxième organe (50) de soufflage d'un deuxième jet de fluide ; et
- un deuxième organe (52) de déplacement dudit deuxième organe de soufflage, de sorte à déplacer le deuxième jet de fluide selon une direction de déplacement, parallèle à la deuxième surface de contact.

7. Ensemble (44) selon la revendication 6, comprenant en outre un circuit (20) de fluide frigorigène, reliant les premier (26) et deuxième (28) échangeurs thermiques.

8. Véhicule terrestre comprenant au moins une voiture (10), ladite voiture (10) comprenant un ensemble (44) pour traitement d'air selon l'une des revendications précédentes.

## Patentansprüche

1. Vorrichtung (44) zur Luftbehandlung, umfassend einen ersten Wärmetauscher (26) und eine erste Vorrichtung (46) zum Reinigen des ersten Wärmetauschers (26), wobei der erste Wärmetauscher (26) umfasst: eine erste Kontaktfläche (34), die senkrecht zu einem Luftstrom (36) angeordnet ist, um einen Wärmeaustausch mit dem Luftstrom (36) zu ermöglichen, und eine Vielzahl von Lamellen (40), die sich in Ebenen (Y, Z) senkrecht zur ersten Kontaktfläche (34) erstrecken;
wobei die erste Reinigungsvorrichtung (46) umfasst:
- ein erstes Blaselement (50); und
- ein erstes Element (52) zum Verschieben des ersten Blaselements (50) in einer Verschieberichtung (X), die parallel zur ersten Kontaktfläche (34) und senkrecht zu den Lamellen (40) verläuft;
wobei das erste Blaselement umfasst: eine Vielzahl von Düsen (54), die entlang einer Kanalachse (60) parallel zur ersten Kontaktfläche (34) ausgerichtet sind; und eine Fluidzufuhrvorrichtung (56), die mit der Vielzahl von Düsen verbunden ist; wobei die Düsen derart angeordnet sind, dass sie erste Luftstrahlen (64) blasen, die im Wesentlichen koplanar in einer Ebene parallel zur Kanalachse (60) sind;
wobei die Anordnung **dadurch gekennzeichnet ist, dass** eine Richtung (74) jedes ersten Luftstrahls (64) einen Winkel (α) zwischen 30° und 60° mit der ersten Kontaktfläche (34) bildet, wobei der Winkel (α) so gewählt ist, dass er einen Einfallswinkel jedes ersten Fluidstrahls (64) auf die Ebene jeder Lamelle (40) bildet.

2. Anordnung (44) nach Anspruch 1, wobei der erste Winkel (α) zwischen jedem ersten Ludtstrahl (64) und der ersten Kontaktfläche (34) nahe 45° liegt.

3. Vorrichtung (44) nach Anspruch 1 oder 2, wobei das erste Bewegungselement (52) umfasst: eine Halterung (66), die fest mit der ersten Kontaktfläche (34) verbunden ist; und ein bewegliches Element (68), das fest mit dem ersten Blaselement (50) verbunden ist.

4. Vorrichtung (44) nach Anspruch 3, wobei die Halterung (66) wenigstens eine Schiene (70) umfasst, die sich in Bewegungsrichtung (X) erstreckt; und das bewegliche Element (68) auf der wenigstens einen Schiene gleiten kann.

5. Vorrichtung (44) nach Anspruch 3 oder 4, wobei das bewegliche Element (68) in Bezug auf die Halterung (66) abnehmbar ist.

6. Vorrichtung (44) nach einem der vorhergehenden Ansprüche, welche ferner einen zweiten Wärmetauscher (28) und eine zweite Vorrichtung (44) zum Reinigen des zweiten Wärmetauschers (28) umfasst,
wobei der zweite Wärmetauscher (28) eine zweite Kontaktfläche (34) umfasst, die dazu bestimmt ist, senkrecht zu einem Luftstrom angeordnet zu werden, um einen Wärmeaustausch mit diesem Strom zu ermöglichen,
wobei die zweite Reinigungsvorrichtung umfasst:
- ein zweites Blaselement (50) zum Ausstoßen eines zweiten Fluidstrahls; und
- ein zweites Element (52) zum Verschieben des zweiten Blaselements, um den zweiten Fluidstrahl in einer Bewegungsrichtung parallel zur zweiten Kontaktfläche zu verschieben.

7. Anordnung (44) nach Anspruch 6, welche ferner einen Kältemittelkreislauf (20) umfasst, der den ersten (26) und den zweiten (28) Wärmetauscher verbindet.

8. Landfahrzeug mit wenigstens einem Wagen (10), wobei der Wagen (10) eine Luftbehandlungsvorrichtung (44) gemäß einem der vorhergehenden Ansprüche umfasst.

## Claims

1. Air-treatment assembly (44), comprising a first heat exchanger (26) and a first device (46) for cleaning said first heat exchanger (26),
the first heat exchanger (26) comprising: a first contact surface (34), intended to be disposed perpendicularly to an air flow (36) for a heat exchange with said flow (36), and a plurality of fins (40) extending in planes (Y, Z) perpendicular to the first contact surface (34);
the first cleaning device (46) comprising:
- a first blowing member (50); and
- a first member (52) for moving said first blowing member (50), in a movement direction (X) parallel to the first contact surface (34) and perpendicular to the fins (40);
the first blowing member comprising: a plurality of nozzles (54) aligned along a channel axis (60), parallel to the first contact surface (34); and a fluid-supply device (56), connected to the plurality of nozzles;
the nozzles being arranged so as to blow first air jets (64) substantially coplanar in a plane parallel to the channel axis (60);
the assembly being **characterised in that** a direction (74) of each first air jet (64) forms an angle (α), of between 30° and 60° with the first contact surface (34), said angle (α) being selected so as to form an incident angle of each first fluid jet (64) in the plane of each fin (40).

2. Assembly (44) according to claim 1, wherein the first angle (α) between each first air jet (64) and the first contact surface (34) is close to 45°.

3. Assembly (44) according to claim 1 or 2, wherein the first movement member (52) comprises: a support (66) secured to the first contact surface (34); and a movable element (68) secured to the first blowing member (50).

4. Assembly (44) according to claim 3, wherein the support (66) comprises at least one rail (70) extending along the movement direction (X) ; and the movable element (68) is able to slide on the at least one rail.

5. Assembly (44) according to claim 3 or 4, wherein the movable element (68) is removable relative to the support (66).

6. Assembly (44) according to one of the preceding claims, further comprising a second heat exchanger (28) and a second device (44) for cleaning said second heat exchanger (28),
the second heat exchanger (28) comprising a second contact surface (34), intended to be disposed perpendicularly to an air flow for a heat exchange with said flow,
the second cleaning device comprising:
- a second member (50) for blowing a second fluid jet; and
- a second member (52) for moving said second blowing member, so as to move the second fluid jet in a movement direction parallel to the second contact surface.

7. Assembly (44) according to claim 6, further comprising a refrigerant-fluid circuit (20), connecting the first (26) and second (28) heat exchangers.

8. Land vehicle comprising at least one car (10), said car (10) comprising an air-treatment assembly (44) according to one of the preceding claims.
